# EUROPEAN PATENT SPECIFICATION

(11) **EP 3 108 179 B1**
(45) Date of publication and mention of the grant of the patent: **18.10.2017**
(21) Application number: 15704526.1
(22) Date of filing: 12.02.2015
(51) Int. Cl.: F21V 33/00, E06B 3/00, E06B 3/67, F21V 23/04

(54) **LIGHT SHIELD USING INTEGRATED LIGHTING TO CREATE OPACITY AND PRIVACY IN WINDOWS**
LICHTBLENDE MIT INTEGRIERTER BELEUCHTUNG ZUR ERZEUGUNG VON OPAZITÄT UND PRIVATSPHÄRE AN FENSTERN
ECRAN UTILISANT UN ÉCLAIRAGE INTÉGRÉ POUR CRÉER L'OPACITÉ ET LA CONFIDENTIALITÉ DANS DES FENÊTRES

(30) Priority: 17.02.2014 US 201461940693 P; 13.03.2014 EP 14159401
(43) Date of publication of application: 28.12.2016
(73) Proprietor: Philips Lighting Holding B.V., 5656 AE Eindhoven (NL)
(72) Inventor: BOISSEVAIN, Christopher, James, NL-5656 AE Eindhoven (NL); SCHOBBEN, Daniël, Willem, Elisabeth, NL-5656 AE Eindhoven (NL)
(74) Representative: Verweij, Petronella Daniëlle
(86) International application number: PCT/EP2015/052969
(87) International publication number: WO 2015/121352

(56) References cited:
- WO-A1-2006/065049
- WO-A1-2011/030284
- WO-A1-2013/153837
- WO-A2-2006/081186
- DE-A1- 10 046 263
- DE-U1- 20 310 788
- US-A1- 2009 272 136
- US-A1- 2013 301 300

## Description

### FIELD OF THE INVENTION

The invention relates to a window system as well as to the use thereof.

### BACKGROUND OF THE INVENTION

Privacy windows are known in the art. WO2006/081186, for instance, describes in an embodiment a lighted privacy window which may comprise an at least partially transparent panel within a divider. The panel may be constructed in a manner such that when the lighted privacy window is in an "on-state," the panel is illuminated from within with light generated by one or more LED-based lighting units integrated in some manner with the panel, thereby becoming opaque and affording increased privacy. In one aspect, significant opacity results from reflections of the illumination within the panel due to perturbations in or on the surface of the panel that serve as scattering centers for the generated light. For example, a surface of the panel may be laminated or physically agitated (e.g., via sandblasting, etching, acid, laser beam, applied frit, etc.) in order to generate the surface perturbations. When the privacy window is in an "off-state," the illumination generated by the one or more LED-based sources integrated with the panel is extinguished and the panel becomes appreciably transparent, thereby facilitating some degree of viewing into and out of the workspace.

WO2013153837A1 discloses a lighting system comprising a window panel, a lighting unit and a control unit, wherein the system is configured to reduce the visibility of an object inside a structural body light via edge lighting.

### SUMMARY OF THE INVENTION

Some prior art window systems use edge lighting. Such window systems may be relative expensive when an element is broken or not well adjusted, as this may imply that the entire window system including edge lights have to be replaced.

Alternatives to privacy windows may include switchable windows. However, they may suffer from the same problem and are relative expensive. Ordinary curtains or curtain systems may of course be a good and cheap solution but these may suffer from the disadvantage that intermediate levels of privacy are not easily selectable. Some of these solutions also suffer from the problem that enhancing privacy may also lead to a reduction of incoming light and the necessity to use artificial light.

Hence, it is an aspect of the invention to provide an alternative privacy window system, which preferably further at least partly obviate one or more of above-described drawbacks.

In a first aspect, the invention provides a privacy window system (herein also indicated as "system") comprising a window panel, a lighting unit, and a control unit, wherein:
- the window panel (herein also indicated as "panel") comprises a first surface, a second surface and an edge, wherein especially the window panel is transmissive for visible radiation, wherein at least one of the surfaces of the window panel comprises surface structures, wherein the at least one of the surfaces comprising said surface structures (herein also indicated as "structures") is configured to generate visible privacy light, especially under irradiation with lighting unit radiation;
- the lighting unit is configured to irradiate at least one of the surfaces of the window panel with said lighting unit radiation from a first and/or from a second side thereby inducing said (visible) privacy light and reducing visibility through the window panel in at least one direction; and
- the control unit is configured to control the lighting unit radiation as function of an input signal.

In yet a further aspect, the invention also provides the use of such privacy window system, for instance for controlling privacy at at least one of the sides of the window panel. As will be indicated below, the window panel may especially define two sides (of the window panel).

With the present window system, the window panel and/or lighting unit may be replaced separate from each other. Further, it is also possible to use existing windows and arrange a lighting unit to the window panel and apply the surface structures on one (or both) surface(s) of the panel, making such existing window a privacy window. The privacy window may be used for controlling privacy, e.g. as function of indoor light and/or as function of outdoor light (including daylight). The privacy window may be controllable by a user in a room (at one side of the window) comprising such window and/or may centrally be controlled. Further, the extent of privacy may be controlled by such user. Hence, the presently proposed privacy window system is very versatile and may be applied in new and existing buildings. For instance, the privacy window system may be integrated in a hotel room, but also in other types of rooms, may be integrated in internal walls or external walls, etc..

The window panel may especially be an ordinary window panel, such as a glass panel. It may e.g. include a double or triple glass window (sometimes also indicated as "double pane window" or "triple pane window", respectively). Here, the window panel is especially the unit of (substantially) transparent material, being single, double, triple, or higher paned Therefore, the window panel may comprise a transmissive material and is especially transmissive for visible radiation (at least in one direction, see below). Hence, the window panel has a first surface and a second surface and an edge, perimetrically surrounding the window panel and bridging the first surface and second surface. In case of a square or rectangular window, the edge will consist of four edge parts, perimetrically surrounding the window pane.

The window panel creates a first side, at one side of the panel, and a second side, at the other side of the panel. Herein, sometimes also the term "user side" is applied, to indicate the side of the window where privacy may (temporarily) be desired. The term "user side" or "other side" or "second side" especially refers to the side where a user may desire privacy. The term "external side" or "one side" or "first side" especially refers to side opposite of the user side relative to the window panel. For instance, assuming a hotel room, or other room, etc., in general the user side will be the room side, whereas the other side may be the exterior of the hotel, etc.. In another example, in case of a shower or office room, the user side may be the shower cabin or the room, and the other side or external side may the side at the other side of the window panel, such as outside the shower cabin or outside the office room, respectively. Note however that in some embodiments privacy at both sides may (temporarily) be desirable.

The term "window panel" may also refer to a plurality of window panels, which may e.g. be arranged next to each other, directly adjacent or with a non-zero distance between each other. Hence, the invention also includes a privacy window system with a plurality of window panels.

The window panel is especially transparent, i.e. the window panel material is transparent, such as glass, though the window pane material may also be polymeric. Especially, the window pane is still (substantially) transparent, even though the structures are available at at least one of the surfaces of the window. A transparent window with structures thereon may for instance be provided by providing a window panel and laminating a transparent foil including the surface structures on at least one of the window surfaces. Alternatively or additionally, a transparent window panel with structures thereon may for instance be provided by providing a window panel and physically agitating at least one of the window surfaces, such as by sandblasting, etching, acid etching, laser beam treatment, etc. Also a window panel with a permanent printed glass coating in pattern, such as serigraphed (screen printed) glass frit, may be applied. Especially, the structures are applied in a pattern, especially a regular pattern such that in the order of 5-85% of the side is covered by the structures, especially in the order of 30-50%. The structures may especially include one or more of indentations, grooves and elevations. Hence, at the position of a structure, the window may not be transparent, but may optionally be translucent. The terms "indentations", "grooves" or "elevations" especially refer to such structures relative to a mean surface or a mean surface height. The elevations may in an embodiment also include a thin film or foil, such as e.g. a printed pattern of ink dots or other types of dots. The structures may in embodiments have one or more dimension equal to or below 5 mm, especially in the range of 0.01-5 mm, such as below 2 mm, like below 1.5 mm, especially in the range of 0.01-1 mm. Especially, the structures may have heights or depths in the range of 0.01-5 mm. For instance, grooves may be applied having a depts of 0.5 mm (and a length of a few centimers or longer). However, other dimensions may also be applied.

Hence, even though these structures are available, the window panel may be (substantially) transparent in one or both directions, especially both directions, i.e. one may view through the window panel and see an object behind the window panel, irrespective of the position of the viewer at one side or another side (and the object at the other side or the one side, respectively) (especially assuming a stage where the privacy lighting is not switched on). However, the window panel may, under daylight conditions also be a one-way window or one-way mirror (see below). Hence, especially in at least one direction, at least a substantial part of visible light travelling perpendicular to the window panel including surface structures at at least one of the surfaces may travel through the window panel without substantially being deflected. For instance, in the order of at least 20% of the light intensity that impinges on one surface is transmitted through the window panel and escapes from the other surface of the window panel without being deflected, especially in the order of at least 30%, such as in the order of 30-90%.

In an embodiment, the window is (substantially) transparent in one direction. In yet another embodiment, the window is (substantially) transparent in both directions. In many cases, the latter situation may be applicable. In such embodiments, in the order of at least 20% of the light intensity that impinges on one surface (with or without surface structures) is transmitted through the window panel and escapes from the other surface (or opposite surface) of the window panel without being deflected, and the same applies when the visible light impinges on the other surface (without or with surface structures), i.e.: in the order of at least 20% of the light intensity that impinges on one surface (without or with surface structures) is transmitted through the window panel and escapes from the other surface (or opposite) of the window panel without being deflected. However, the former situation, i.e. (substantially) transparent in one direction, may also apply. Such embodiment especially relates to a one-way mirror or one-way glass. A one-way mirror, one-way glass, or two-way glass is a mirror that is partially reflective and partially transparent. When one side of the mirror is brightly lit and the other is dark, it allows viewing from the darkened side but not vice versa. Assuming such one-way mirror to be a window of a room, then the extent of non-transparency in one direction, i.e. the mirror function, may depend upon the intensity of the light at the back side of the one-way window panel. Is the light in the room switched off, then a person in the room may experience very good transparency (and privacy), and a person outside the room (at the other side of the window panel) may experience very good mirror properties. However, when the person in the room switches on the light in the room, then the mirror properties, and thereby the privacy, may decrease.

The structures may especially be scattering. Hence, when illuminating with visible light, visible light will be scattered. The structures can be arranged such that a substantial part is directed in one direction (away from one of the surfaces). For instance, when the lighting unit is arranged at one side, the structures may be arranged at the same side, and lighting unit radiation scattered and/or reflected by the structures may emanate from the window panel in a direction away from this side. Assuming the lighting unit to provide visible radiation, a spectator at this side will perceive the reflected and/or scattering light, and will be hindered in viewing through the window panel in the opposite direction as the light emanates. The more intense the privacy light (see also below), the less it is possible to view through the window panel in a direction anti parallel to the propagation direction of the privacy light. This is an elegant way to provide privacy to a user at the other side of the window panel, without the possible disadvantage to be forced to reduce incoming daylight and/or transparency in the other direction through the window (as is e.g. the case with conventional lamellar privacy curtains). Hence, a kind of light shield using integrated lighting is provided. The invention allows creating opacity and privacy in windows by switching on the lighting unit radiation or increasing its intensity, thereby providing the visible privacy light. In one direction, anti-parallel to at least part of the visible privacy light, the window panel is perceived opaque, thereby creating privacy for the other side (of the window panel).

Hence, the invention also provides an embodiment of the privacy window system wherein the surface structures comprise reflective surface structures and wherein the lighting unit radiation comprises visible light. The term "reflective structures" may also include scattering structures. In general, when reflective structures are applied, the reflective structures are arranged to provide a reflection of the lighting unit radiation having substantial Lambertian properties. In this way, privacy is not limited to a specific viewing angle.

Additionally or alternatively, the structures may include a luminescent material that is excitable by the lighting unit radiation. Hence, the lighting unit radiation may include radiation that is able to excite the luminescent material. The lighting unit radiation may include on or more of UV and visible radiation. The luminescent material may be excitable by one or more of the UV and visible radiation. Radiation that is not absorbed by the luminescent material may be reflected (and/or scattered). Hence, the invention also provides an embodiment of the privacy window system wherein the surface structures comprise luminescent material excitable by the lighting unit radiation. Therefore, the privacy light may include one or more of reflected light (especially scattered light) and luminescence. The privacy light is visible light. Hence, when the surface structures are configured to be reflective structures, the lighting unit will be configured to provide at least visible light. When the surface structures comprise luminescent material, the luminescent material is configured to provide (at least) visible light upon excitation by the lighting unit radiation.

The luminescent material may be selected from one or more of fluorescent material and phosphorescent material. The former may have a lifetime of 0.1 µs or smaller; the latter may have a lifetime of larger than 0.1 µs, such as even larger than 1 second. Some phosphorescent materials, especially those which have a lifetime of 1 second or larger, are also known as glow in the dark phosphors.

Hence, in yet a further first aspect, the invention provides a privacy window system (herein also indicated as "system") comprising a window panel, optionally a lighting unit, and optionally a control unit, wherein the window panel comprises a first surface, a second surface and an edge, wherein the window panel comprises a transmissive material and is transmissive for visible radiation, wherein at least one of the surfaces of the window panel comprises surface structures, wherein the at least one of the surfaces comprising said surface structures (herein also indicated as "structures") is configured to generate visible privacy light under irradiation with radiation, such as daylight, wherein the surface structures comprise luminescent material (especially glow-in-the-dark luminescent material; i.e. materials that have a long afterglow) that is excitable by daylight and which has a lifetime of at least 0.5 h, especially at least 1 h; and the optional lighting unit is configured to irradiate one of the surfaces of the window panel with said lighting unit radiation thereby inducing said (visible) privacy light and reducing visibility through the window panel in at least one direction; and the optional control unit is configured to control the (one or more variables of the) lighting unit radiation as function of an input signal.

The surface structures (luminescent or not) may be a homogenously distributed and may in some embodiments create a slightly opaque window panel. This may work as well as embodiments wherein discrete structures, which may keep some parts completely transmissive and others significantly modified, are applied. However, especially in the order of at least 20% of the light intensity that impinges on one surface is transmitted through the window panel and escapes from the other surface of the window panel without being deflected, especially in the order of at least 30%, such as in the order of 30-90% (see also above).

In yet a further embodiment, structures are applied that are configured to reflect light to both the outside and the inside of the window (e.g. etched surfaces), such as to equally reflect light to both the outside and the inside of the window. In yet a further embodiment, structures are applied that are configured to substantially reflect light to the side where the (LED) light source(s) is (are) arranged, such as e.g. by painting the structures so that the paint reflects but does not let light through the paint. This effect may be further emphasized by shining the light mostly in parallel to the window panel such that the window panel, such as glass, itself will reflect the light outwards (almost no light is coupled into the glass).

As indicated above, at least one of the surfaces of the window panel comprises surface structures. Hence, the invention also relates to embodiments wherein both sides of the window panel comprise the surface structures. Especially, also in those embodiments the window panel is still (substantially) transparent; i.e. the surface structures are configured at both sides of the window panel to provide a transparent window panel (see also above). With surface structures at both sides, especially when both side can be irradiated with lighting unit radiation (especially from different lighting units), privacy may be controlled for both directions of viewing. For instance, a window connecting two rooms may be used to control privacy in one direction, in the other (the opposite) direction and in both directions, if desired.

The lighting unit may in principle be any lighting unit. Especially, the lighting unit may be integrated in a single unit with the window panel. Hence, in an embodiment the window panel and the lighting unit, and optionally the control unit (see also below) are integrated in a single window unit. In such instance, the shortest distance between the lighting unit and the window panel may be within a few centimeters. However, the lighting unit may also be arranged remote, such as at a shortest distance to the window panel of a meter, up to tens of meters or even further. For instance, a kind of wallwasher lighting unit for a (multi-floor) building with privacy window panels may also be an embodiment of the privacy window system as described herein. Especially, the lighting unit is provided to provide direction radiation. In this way, substantially only the window panel may be irradiated, without substantial light pollution. Further, the lighting unit may (thus) especially be configured at one of the sides of the window panel, to irradiate one of the surfaces (and especially not the edge).

The term "lighting unit" may also refer to a plurality of lighting units. The plurality of lighting units may be configured to irradiate a single window panel. However, the plurality of lighting units may also be configured to irradiate a plurality of window panels. Optionally, the privacy window system may comprise a plurality of lighting units which are configured to illuminate both the first surface and the second surface. When both surfaces comprise surface structures, privacy at both sides may be controlled.

The lighting unit may comprise one or more (array(s) of) light sources. The lighting unit may e.g. include one or more of (i) one or more high pressure lamps, (ii) one or more halogen lamps, and (iii) one or more solid state light sources. In a specific embodiment, the light source(s) comprise(s) a solid state LED light source (such as a LED or laser diode).

As already indicated above, the lighting unit is configured to provide lighting unit radiation to the at least one first surface and second surface of the window panel. The radiation provided may include one or more of UV radiation and visible light. Hence, the radiation unit may also be configured to provide UV and visible radiation.

In case the lighting unit is configured to provide visible light, this may be white light or colored light. In a specific embodiment, the lighting unit radiation is variable in one or more of color, color temperature and intensity. The phrase "wherein the lighting unit radiation is variable intensity" and similar phrases indicate that in between an on-state and off-state also other states can be chosen, having non-zero values and non-maximum values. Specific embodiments will be further elucidated below.

The lighting unit may especially be configured to provide the radiation to one of the surfaces under a grazing angle with said surface, such as under an angle in the range of larger than 0 and equal to or smaller than 25° with the surface, especially equal to or smaller than 15°, yet even more especially equal to or smaller than 7.5°

The term white light herein, is known to the person skilled in the art. It especially relates to light having a correlated color temperature (CCT) between about 2000 and 20000 K, especially 2700-20000 K, for general lighting especially in the range of about 2700 K and 6500 K, and for backlighting purposes especially in the range of about 7000 K and 20000 K, and especially within about 15 SDCM (standard deviation of color matching) from the BBL (black body locus), especially within about 10 SDCM from the BBL, even more especially within about 5 SDCM from the BBL.

The terms "violet light" or "violet emission" especially relates to light having a wavelength in the range of about 380-440 nm. The terms "blue light" or "blue emission" especially relates to light having a wavelength in the range of about 440-490 nm (including some violet and cyan hues). The terms "green light" or "green emission" especially relate to light having a wavelength in the range of about 490-560 nm. The terms "yellow light" or "yellow emission" especially relate to light having a wavelength in the range of about 540-570 nm. The terms "orange light" or "orange emission" especially relate to light having a wavelength in the range of about 570-600. The terms "red light" or "red emission" especially relate to light having a wavelength in the range of about 600-750 nm. The term "pink light" or "pink emission" refers to light having a blue and a red component. The terms "visible", "visible light" or "visible emission" refer to light having a wavelength in the range of about 380-750 nm. The term "UV light" or "UV radiation" especially refers to radiation having a wavelength in the range of about 120-380 nm, especially 200-380 nm.

As indicated above, by irradiating one of the surfaces (of the window panel with said lighting unit radiation said privacy light is induced (and thereby opacity is created). Thereby, visibility through the window panel in at least one direction is reduced. Hereby, the privacy function of the privacy window panel is provided.

As indicated above, the lighting unit is configured to irradiate one of the surfaces of the window panel. Hence, radiation escaping from the lighting unit impinges on the surface, and part thereof may penetrate into the window material, and may optionally escape from the window panel, for instance at another position / other than where the radiation entered the window panel. Hence, instead of using edge-lighting for the irradiation of the window panel the lighting unit is especially configured to irradiate with lighting unit radiation the window panel via one of the surfaces, thereby not using the principle of edge lighting, nor the glass itself as a wave guide. Hence, the lighting unit is especially configured to provide radiation to the surface with the surface structures, whereafter optionally part of the radiation may penetrate into the window panel (and escape elsewhere from the window panel). The lighting unit may thus especially be configured to irradiate the window panel (surface comprising the surface structures) from a first side or a second side (i.e. especially at least from the side from which directly the surface comprising the surface structures can be irradiated).

The phrase "the lighting unit is configured to irradiate one of the surfaces of the window panel" and similar phrases may especially indicate that during use of the lighting system, at least temporarily the lighting unit may irradiate one of the surfaces of the window panel.

The control unit is especially configured to control the lighting unit radiation as function of an input signal. By controlling the lighting unit radiation, the privacy light is controlled. Hence, one may also state that the control unit is especially configured to control the privacy light as function of an input signal. The term "control unit" may also refer to a plurality of control units, which may especially be functionally coupled. Hence, such plurality of control units may be able to communicate with each other and/or with a master control unit (see also below). Therefore, the control unit communicates with at least the lighting unit and optionally with one or more other control units. The control unit is especially configured to control the one or more variables of the lighting unit radiation.

Further, the control unit may include a user interface. The user interface may be integrated in the control unit, but may also be remote from the control unit. Hence, the control unit may also communicate with the user interface. The term "user interface" may also refer to a plurality of user interfaces. The privacy window system may include a plurality of user interfaces. For instance, when there is a plurality of control units, each control unit may include a user interface.

For instance in the case of a hotel, each room may include a control unit and a user interface for controlling the respective lighting unit radiation, whereas there may also be a central control unit, as master control unit, which may e.g. be able to take into account the (different) user input informations indicated in the different rooms, while also displaying information on a facade of the hotel based on the composition of a plurality of lighting units at the outside of the hotel (see also below).

The control unit may be a remote control unit, which communicates wireless (with one or more other elements within the privacy window system, such as the lighting unit). The control unit may also be integrated in a single unit with the window panel (and optionally communicate wireless). Hence, in a specific embodiment, the window panel and the control unit are integrated in a single window unit. As indicated above, the lighting unit may also be integrated in the window unit. Hence, in a further specific embodiment, the window panel, the lighting unit, and the control unit are integrated in a single window unit.

The input signal may especially be an electronic input signal from especially one or more of a user interface, a sensor, or a timer system. For instance, the timer system may trigger with a timer signal a general setting of the privacy window system, the sensor(s) may fine tune the privacy window system based on ambient light at one side, and the user may define specific settings, such as the extend of privacy desired ("full", "medium" "low", "no", etc.). The timer system may also include a sensor, such as a sensor configured to derive the time from e.g. an audio signal.

As already indicted above, the privacy window system may also include a sensor. The term "sensor" may also refer to a plurality of sensors. Hence, the system may also include a plurality of sensors. Especially, the sensor may include one or more optical sensors selected from the group of (i) a sensor configured to sense ambient light at one side of the window, and (ii) a sensor configured to sense ambient light at another side of the window. Such sensor may e.g. include a light sensitive cell and/or may include a CCD camera.

As indicated above, the level of the ambient light at the side where privacy is desired, may have influence on the intensity of the lighting unit radiation (at the other side) needed to provide the desired privacy. On the other hand, when the intensity of the ambient light at the side where the structures are lit is high, the lighting unit radiation intensity may have to be adapted or can be adapted to meet the desired privacy. Hence, the invention also provides an embodiment of the privacy window system further comprising a light sensor, wherein the control unit is further configured to control the (one or more variables of the) lighting unit radiation as function of an ambient light sensor signal of the light sensor. This light sensor may be configured at one side of the window panel (for instance the user side), but may also be configured at another side of the panel (for instance the external side). Especially, the invention also provides an embodiment of the privacy window system further, comprising light sensors at both sides of the window panel, wherein the control unit is further configured to control the lighting unit radiation as function of ambient light sensor signals of both light sensors.

A further type of sensor may e.g. a motion sensor or an interruption sensor (e.g. when someone moves through a laser beam, such as an IR laser beam). Such sensors are herein indicated as "presence sensor". Hence, the invention also provides an embodiment of the privacy window system further comprising a presence sensor, wherein the control unit is further configured to control the (one or more variables of the) lighting unit radiation as function of a presence sensor signal of the presence sensor. When a presence of a human is detected, the radiation intensity of the lighting unit radiation may be increased.

The sensor as described above may also be used to save energy, as the system may be used optimal.

It may be desirable that a user may have influence on e.g. color or color temperature, and especially intensity of the lighting unit radiation. In this way, the user can tune the privacy to a custom level. Hence, the invention also provides an embodiment of the privacy window system, wherein one or more of the color, color temperature, and the intensity of the lighting unit radiation is variable, wherein the privacy window system further comprises a user interface, wherein the control unit is further configured to control the lighting unit radiation as function of an input signal of the user interface.

Alternatively or additionally, the light characteristics of light at the user side may be variable. In such instance, it may also be desirable to control the lighting unit radiation as function of the light characteristics at the user side. This may for instance be achieved with a light sensor at the user side (see also above) and/or this may be achieved via a control unit controlling both one or more light characteristics of light at the user side and the radiation of the lighting unit. Hence, the invention also provides an embodiment of the privacy window system, further comprising a second lighting unit arranged at another side of the window panel than the lighting unit, wherein the second lighting unit is configured to provide second lighting unit light, wherein one or more of the color, color temperature, and the intensity of the second lighting unit light is variable, and wherein the control unit is configured to control the (one or more variables of the) lighting unit radiation as function of the second lighting unit light. Influence on the color temperature and/or intensity, especially both, may add a further functionality, such as influencing the circadian rhythm. Especially in hotel rooms, it may be desirable to chance in a controlled way the circadian rhythm to a local time zone or a future time zone (to which one is going to travel).

Therefore, the invention also provides the use of such privacy window system as defined herein, wherein a room, such as a hotel room, further comprises a second lighting unit configured to provide second lighting unit light, wherein one or more of the color, color temperature, and the intensity of the second lighting unit light is variable, and wherein the control unit is configured to control the lighting unit radiation as function of the second lighting unit light. Of course, this may also be used in offices, etc. (see also below).

As indicated above, the system may include a plurality of lighting units and/or a plurality of window panels and/or a plurality of control units, etc. especially, the herein described privacy window system may be comprised by a larger (more complex) system comprising a plurality of window panels and one or more lighting units configured to irradiate the one or more window panels. Hence, the invention also provides an embodiment of the privacy window system, comprising a plurality of window panels, a plurality of lighting units, and said control unit, wherein the plurality of lighting unit are configured to irradiate one of the surfaces of the plurality of window panels with lighting unit radiation, and wherein the control unit is configured to control the lighting unit radiation of the plurality of lighting units as function of the input signal. Of course, such system may also comprise a plurality of (functionally related) control units (and a plurality of user interfaces). Note that the pluralities indicated do not necessarily refer to the same numbers. For instance, a single lighting unit may irradiate two or more window panels. Further, a single lighting unit may control a plurality of lighting units. The phrase "wherein the plurality of lighting unit are configured to irradiate one of the surfaces of the plurality of window panels with lighting unit radiation" especially indicate that each window panel is irradiated at one side by one or more of the plurality of lighting units.

Hence, the invention also provides a (complex) system comprising a plurality of the herein described privacy window systems. One of the control units may optionally be a master control unit, or such system comprising a plurality of privacy window system may further include an additional control unit, configured to communicate, or configured to communicate and control, the control units of the privacy window systems includes in the (complex) system.

Such system with a plurality of window panels and a plurality of lighting units may especially be of relevance for office buildings, hotels, hospitals, or other large hospitality areas, etc. This may also allow controlling subsets of window panels, or more precisely subsets of window panel / lighting unit combinations. Hence, the invention also provides an embodiment of the privacy window system, comprising a plurality of subsets of one or more window panels and one or more lighting units configured to irradiate said one or more window panels within the subset, wherein said one or more lighting units of the plurality of subsets are independently controllable, and wherein each subset is functionally coupled to a user interface for controlling said one or more lighting units within the subset. This may provide the option to provide privacy to the user on the one hand, but also to display information on a façade of the building on the other hand. Hence, the invention also provides the use of a plurality of privacy window systems for controlling privacy at at least one of the sides of the plurality of window panels as defined herein, wherein the plurality of window panels are integrated in a facade of a building, wherein the control unit is further configured to display one or more of a letter, a character, an icon, a symbol, a sign, a grapheme, and an illustration with the plurality of privacy window systems on the facade.

More in general, this invention provides the use of a privacy window system as defined herein for controlling privacy at at least one of the sides of the window panel. Especially, the privacy window system is integrated in a hotel room. However, other applications may also be possible, such as integration in an office wall, a hospital wall, or wall of another large hospitality area, wherein such wall may be an internal wall or an external wall.

The terms "upstream" and "downstream" relate to an arrangement of items or features relative to the propagation of the light from a light generating means (here e.g. the especially the lighting unit), wherein relative to a first position within a beam of light from the light generating means, a second position in the beam of light closer to the light generating means is "upstream", and a third position within the beam of light further away from the light generating means is "downstream".

The term "substantially" herein, such as in "substantially all light" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of". The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Furthermore, some of the features can form the basis for one or more divisional applications.

In yet a further aspect, the invention provides a privacy window system (herein also indicated as "system") comprising a window panel, a lighting unit, and a control unit, wherein (i) the window panel (herein also indicated as "panel") comprises a first surface, a second surface and an edge, wherein especially the window panel is transmissive for visible radiation, wherein at least one of the surfaces of the window panel comprises a material having one or more of reflective and luminescent properties, wherein the at least one of the surfaces comprising said surface structures (herein also indicated as "structures") is configured to generate visible privacy light, especially under irradiation with lighting unit radiation; (ii) the lighting unit is configured to irradiate one of the surfaces of the window panel with said lighting unit radiation thereby inducing said (visible) privacy light and reducing visibility through the window panel in at least one direction; and (iii) the control unit is configured to control the lighting unit radiation as function of an input signal. Notwithstanding the presence of the materials with one or more of reflective or luminescent properties, the window panel is transmissive (in at least one direction) for visible light. For instance, the material may be applied as (thin) coating, especially a thin uniform coating.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs.1a-1e schematically depict some aspects of the privacy window system; Fig. 1f shows an example of how the privacy window system may have effect;
Figs. 2a-2d schematically depict some further aspects of the privacy window system.

The schematic drawings are not necessarily on scale.

### DETAILED DESCRIPTION OF THE EMBODIMENTS

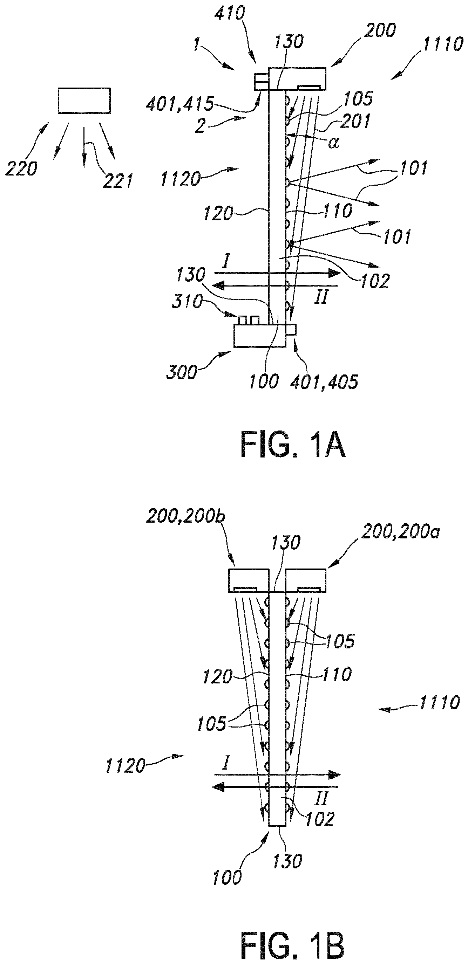

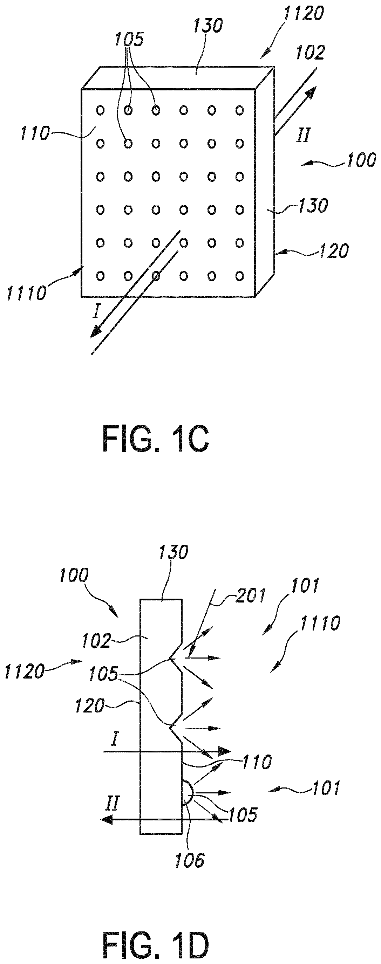

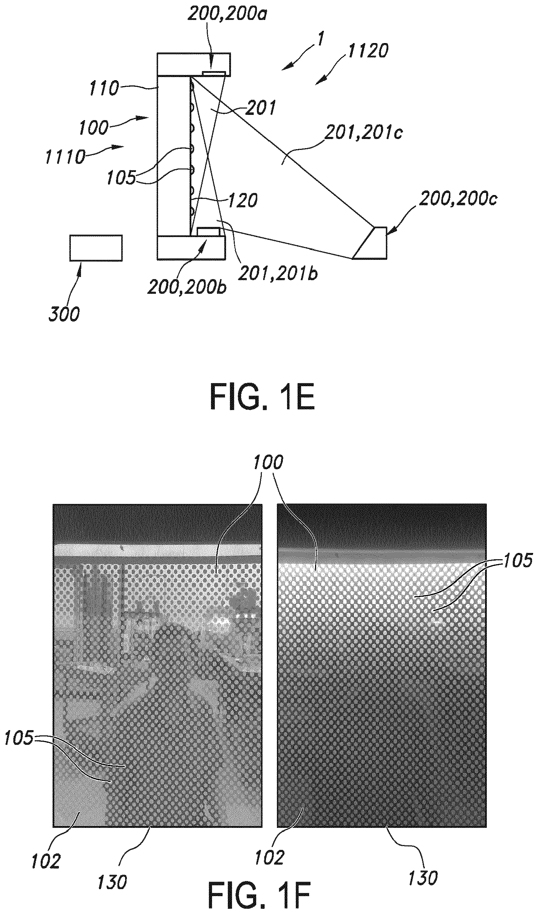

Fig. 1 a schematically depicts an embodiment of a privacy window system 1 comprising a window panel 100, a control unit 300, and a lighting unit 200 comprising at least one light source (not shown) for generation of lighting unit radiation (201) during operation.

The window panel 100 comprises a first surface 110, a second surface 120 and an edge 130. The invention is especially not based on the use of edge lighting. Especially, there is no edge lighting at all. The window panel defines also two sides, a first side 1110, which is in herein only for the sake of understanding associated with the first surface 110, i.e. the first side 1110 is that space in direction I starting from the first side 1110, and a second side 1120 (opposite of the first side, relative to the window panel 100), which is in herein only for the sake of understanding associated with the second surface 120, i.e. the second side 1120 is that space in direction II starting from the second side 1120.

The window panel 100 comprises a transmissive material 102, such as glass or PMMA or another transparent polymeric material; even quartz may be possible. The window panel is transmissive for visible radiation. Hence, visible light may be transmitted through the window panel 100 in at least one of the directions.

At least one of the surfaces 110,120, here first surface 110 of the window panel 100 comprises surface structures 105, such as indentations or luminescent material structures (see also below). The at least one of the surfaces 110,120 comprising said surface structures 105, i.e. here the first surface 110, is configured to generate visible privacy light 101 under irradiation with lighting unit radiation 201. This radiation 101 is induced due to e.g. reflection, like Lambertian reflection of the lighting unit radiation (see below) as the the lighting unit 200 is configured to irradiate one of the surfaces 110,120 of the window panel 100 with said lighting unit radiation 201 thereby inducing said privacy light 101 and reducing visibility through the window panel 100 in at least one direction, here at least in the second direction II. The lighting unit radiation 201 is in this schematic embodiment provided to the first surface under a grazing angle. The angle between the (first) surface and the lighting unit radiation is indicated with angle α.

Further, the control unit 300 may especially be configured to control the (one or more variables of the) lighting unit radiation 201 as function of an input signal, such as from a timer, a light sensor 401, such as in inside light sensor 415 or an outside light sensor 405 (or daylight sensor), or from a user interface 310, or from one or more of these. At the second side 1120, a further lighting unit 220 may be present. As the lighting unit light thereof, indicated with reference 221 may have influence on the transmissivity of the window panel (reflection at the first side 1110 may be less when the light level at the other side 1120 is higher), the control unit may control the lighting unit radiation 201 as function of the second lighting unit light 221. Further, the system 1 may e.g. include a presence sensor 410. The sensors are especially functionally coupled to the control unit 300.

If desired, the radiation 201 may be switched on, or its intensity may be increased, to temporarily generate visible privacy light (at an increased level) to impose or increase opacity in the second direction, thereby providing or improving privacy at second side 1120.

The lighting unit 200 is configured at the first side 1110, or at least irradiates the first surface 110 (comprising surface structures 105) from the first side 1110.

Fig. 1a is a very schematic drawing, which is not limiting. Here, a variant is shown wherein a window unit 2 is provided, wherein two or more of the window panel 100, a lighting unit 200, and a control unit 300, but at least the window panel 100, is integrated in a single unit (i.e. the window unit 2).

Reference 310 indicates a user interface, to instruct the control unit 300.

Fig. 1b schematically shows an embodiment wherein both surfaces 110 and 120 comprise the surface structures, with at each side a lighting unit 200, indicated with references 200a and 200b, respectively. In such embodiment, the privacy in both directions may be controlled (optionally independently). Hence, privacy at both sides 1110,1120 may be controlled. Alternatively the lighting units 200a, 200b are integrated into one lighting unit 200 comprising, for example, two independently controllable (arrays of) light sources (not shown).

The lighting unit 200a is configured at the first side 1110, or at least irradiates the first surface 110 (comprising surface structures 105) from the first side 1110; the lighting unit 200b is configured at the second side 1120, or at least irradiates the second surface 120 (also comprising surface structures 105) from the second side 1120.

Fig. 1c schematically shows a front view of the first side 110 with surface structures 105 of the window panel 100. The surface structures 105 may be arranged in a pattern. This pattern may be regular or irregular, or a combination thereof. Dependent upon the radiation distribution (not shown) an asymmetric distribution of the surface structures may be desired, in order to provide a substantial homogeneous privacy light 101 (not depicted).

Fig. 1d schematically depicts in more detail embodiments of the surface structures 105. The top and middle surface structures may be reflective structures. These may be configured to provide a Lambertian distribution of the privacy light 101. Alternatively or additionally, luminescent material may be comprised by the surface structures 105, as schematically shown in the lower surface structure 105. The luminescent material is indicated with reference 106. Note that the surface structures 105 may also be configured to direct (privacy) light partly in the window panel 100 (not depicted).

Fig. 1e schematically depicts some variants how the first side may be irradiated with lighting unit radiation 201. Three variants of positions are indicated, with lighting units 200a, 200b and 200c, and their respective radiations 201a, 201b and 201c. Note that only one of these options may be chosen, or combinations of two or more of these. However, other configurations may also be possible. Lighting unit 200c in this schematic drawing may irradiate the first surface not with a grazing angle. However, in other configurations also more remote lighting units may irradiate the surface with surface structures with a grazing angle.

Fig. 1f shows a window panel 100 with on the left the lighting unit switched off, or with low intensity, leaving the window panel being transparent (in both directions), and with on the right side the lighting unit switched on or with high intensity. The privacy light substantially reduces the (apparent) transmission; the window panel appears opaque (status in right figure). The features at the other side of the window panel are hardly visible anymore (with this type and density of surface structures and this intensity of lighting unit irradiation). In both statuses, with either lighting unit radiation switched off or switched on, the person at the other side is able to look through the window panel.

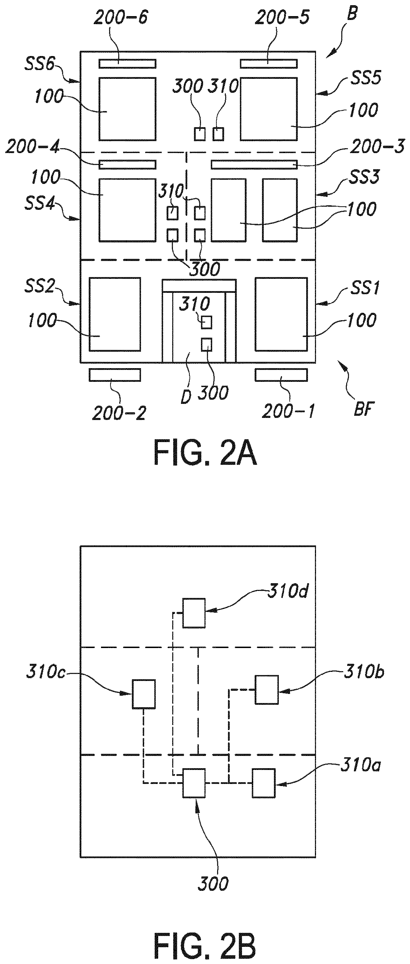

Fig. 2a very schematically shows a building B with three floors, such as a hotel with three floors. The first floor includes two window panels 100, with each lighting units 200 serving the respective window panels. The respective lighting units are indicated with references 200-1 and 200-2. In this way, two subsets SS1 and SS2 are provided, that may be controlled by a singe control unit 300 and a single user interface 310. The second floor shows two rooms, the right room having two window panels, and a single lighting unit 200 (indicated with reference 200-3), a control unit 300 and a user interface 310; the right room having a single window panel 100 and a single lighting unit 200 (indicated with reference 200-4), and also a control unit 300 and a user interface 310. Hereby, two further subset SS3 and SS4, respectively, are provided. The top level shows by way of example a penthouse with two individually controllable window panels 100 with associated lighting units 200, indicated with reference 200-5 and 200-6, respectively. This provides two further subsets SS5 and SS6, respectively, which may be controlled with a single control unit 300 and user interface 310. Reference D indicates a door.

The control unit 300 at the lowest level or main floor may for instance include a master control unit 300. This is schematically depicted in fig. 2b. The control unit 300 is the master control unit. Further, each room may include a user interface, indicated with reference 310a, 310b, 310c and 310d, respectively. The user interface 310 at the main floor may be used for master instructions, whereas the other user interfaces may be used for slave instructions. Optionally, each room may include its own control unit, either independent of each other, or subordinate to a master control unit (analogous to fig. 2b).

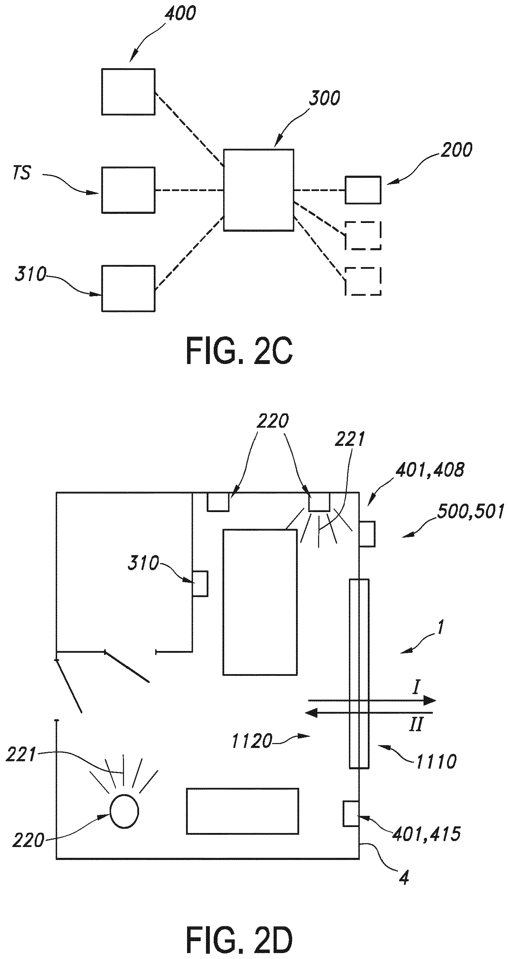

Fig. 2c schematically depicts communications between the control unit 300 and several possible other elements, such as especially one or more lighting units 200, as well as one or more of a sensor 400, a timer system TS, and a user interface 310.

The system, as described herein, may include a plurality of such elements. The elements described herein other than the control unit 300, such as one or more of the lighting unit, the sensor, the timer system, the user interface, etc. may be functionally coupled to the control unit 300.

Fig. 2d very schematically depicts a room 500, especially a hotel room 510 having a wall 4 comprising a window panel 100 which is part of a privacy window system 1. Visibility in direction II may be limited by switching on the radiation of the lighting system (not shown). Hence, a light shield may be used to guarantee privacy of a person within the room, i.e. at side 1120 of the window panel 100. One may e.g. use the window panels of the facade BF to provide a color pattern, optionally changing in time. Especially when more window panels than schematically depicted are available, letters, words, pictures, etc. may be shown with the window panels as pixels. Hence, the control unit 300 may further be configured to display one or more of a letter, a character, an icon, a symbol, a sign, a grapheme, and an illustration with the plurality of privacy window systems 1 on the facade BF.

## Claims

1. A privacy window system (1) comprising a window panel (100), a lighting unit (200), and a control unit (300), wherein:
- the window panel (100) comprises a first surface (110), a second surface (120) and an edge (130), wherein the window panel (100) is transmissive for visible light, wherein at least one of the surfaces (110,120) of the window panel (100) comprises surface structures (105), wherein the at least one of the surfaces (110,120) comprising said surface structures (105) is configured to generate visible privacy light (101) under irradiation with lighting unit radiation (201);
- the lighting unit (200) is configured to irradiate at least one of the surfaces (110,120) of the window panel (100) with said lighting unit radiation (201) from a first (1110) and/or from a second side (1120) thereby inducing said privacy light (101) and reducing visibility through the window panel (100) in at least one direction; and
- the control unit (300) is configured to control the lighting unit radiation (201) as function of an input signal.

2. The privacy window system (1) according to claim 1, further comprising a light sensor (401), wherein the control unit (300) is further configured to control the lighting unit radiation (201) as function of an ambient light sensor signal of the light sensor (401).

3. The privacy window system (1) according to claim 2, comprising light sensors (401) at both sides (1110,1120) of the window panel (100), wherein the control unit (300) is further configured to control the lighting unit radiation (201) as function of ambient light sensor signals of both light sensors (401).

4. The privacy window system (1) according to any one of the preceding claims, further comprising a presence sensor (410), wherein the control unit (300) is further configured to control the lighting unit radiation (201) as function of a presence sensor signal of the presence sensor (410).

5. The privacy window system (1) according to any one of the preceding claims, wherein one or more of the color, color temperature, and the intensity of the lighting unit radiation (201) is variable, wherein the privacy window system (1) further comprises a user interface (310), wherein the control unit (300) is further configured to control the lighting unit radiation (201) as function of an input signal of the user interface (310).

6. The privacy window system (1) according to any one of the preceding claims, further comprising a second lighting unit (220) arranged at another side (1120,1110) of the window panel (100) than the lighting unit (200), wherein the second lighting unit (220) is configured to provide second lighting unit light (221), wherein one or more of the color, color temperature, and the intensity of the second lighting unit light (221) is variable, and wherein the control unit (300) is configured to control the lighting unit radiation (201) as function of the second lighting unit light (221).

7. The privacy window system (1) according to any one of the preceding claims, wherein the window panel (100), the lighting unit (200), and the control unit (300) are integrated in a single window unit (2).

8. The privacy window system (1) according to any one of the preceding claims, wherein the surface structures (105) comprise reflective surface structures and wherein the lighting unit radiation (201) comprises visible light.

9. The privacy window system (1) according to any one of the preceding claims, wherein the surface structures (105) comprise luminescent material (106) excitable by the lighting unit radiation (201).

10. The privacy window system (1) according to any one of the preceding claims, comprising a plurality of window panels (100), a plurality of lighting units (200), and said control unit (300), wherein the plurality of lighting units (200) are configured to irradiate one of the surfaces (110,120) of the plurality of window panels (100) with lighting unit radiation (201), and wherein the control unit (300) is configured to control the lighting unit radiation of the plurality of lighting units (200) as function of the input signal.

11. The privacy window system (1) according to claim 10, comprising a plurality of subsets (SS) of one or more window panels (100) and one or more lighting units (100) configured to irradiate said one or more window panels within the subset (SS), wherein said one or more lighting units (100) of the plurality of subsets (SS) are independently controllable, and wherein each subset (SS) is functionally coupled to a user interface (310) for controlling said one or more lighting units (100) within the subset (SS).

12. Use of a privacy window system (1) according to any one of the preceding claims for controlling privacy at at least one of the sides (1110,1120) of the window panel (100).

13. Use according to claim 12, wherein the privacy window system (1) is integrated in a hotel room (501).

14. Use according to claim 13, wherein the hotel room (501) further comprises a second lighting unit (220) configured to provide second lighting unit light (221), wherein one or more of the color, color temperature, and the intensity of the second lighting unit light (221) is variable, and wherein the control unit (300) is configured to control the lighting unit radiation (201) as function of the second lighting unit light (221).

15. Use of a plurality of privacy window systems (1) for controlling privacy at at least one of the sides (1110,1120) of the plurality of window panels (100) according to any one of claims 12-14, wherein the plurality of window panels (100) are integrated in a facade (BF) of a building (B), wherein the control unit (300) is further configured to display one or more of a letter, a character, an icon, a symbol, a sign, a grapheme, and an illustration with the plurality of privacy window systems (1) on the facade (BF).

## Patentansprüche

1. Fenstersystem zum Schutz der Privatsphäre (1), eine Fensterscheibe (100), eine Beleuchtungseinheit (200) und eine Steuerungseinheit (300) umfassend, wobei:
- die Fensterscheibe (100) eine erste Oberfläche (110), eine zweite Oberfläche (120) und eine Kante (130) umfasst, wobei die Fensterscheibe (100) durchlässig für sichtbares Licht ist, wobei zumindest eine der Oberflächen (110, 120) der Fensterscheibe (100) Oberflächenstrukturen (105) umfasst, wobei die zumindest eine der Oberflächen (110, 120), welche die besagten Oberflächenstrukturen (105) umfasst, konfiguriert ist, um sichtbares Licht (101) zum Schutz der Privatsphäre unter Bestrahlung mit der Strahlung (201) der Beleuchtungseinheit zu erzeugen;
- die Beleuchtungseinheit (200) konfiguriert ist, um die zumindest eine der Oberflächen (110, 120) der Fensterscheibe (100) mit der besagten der Strahlung (201) der Beleuchtungseinheit von einer ersten (1110) und/ oder von einer zweiten Seite (1120) zu bestrahlen, wodurch das besagte Licht (101) zum Schutz der Privatsphäre induziert wird und die Sichtbarkeit durch die Fensterscheibe (100) hindurch in zumindest eine Richtung verringert wird; und
- die Steuerungseinheit (300) konfiguriert ist, um die Strahlung (201) der Beleuchtungseinheit in Abhängigkeit von einem Eingangssignal zu steuern.

2. Fenstersystem zum Schutz der Privatsphäre (1) nach Anspruch 1, darüber hinaus einen Lichtsensor (401) umfassend, wobei die Steuerungseinheit (300) darüber hinaus konfiguriert ist, um die Strahlung (201) der Beleuchtungseinheit in Abhängigkeit von einem Umgebungslichtsensorsignal des Lichtsensors (401) zu steuern.

3. Fenstersystem zum Schutz der Privatsphäre (1) nach Anspruch 2, Lichtsensoren (401) auf beiden Seiten (1110, 1120) der Fensterscheibe (100) umfassend, wobei die Steuerungseinheit (300) darüber hinaus konfiguriert ist, um die Strahlung (201) der Beleuchtungseinheit in Abhängigkeit von Umgebungslichtsensorsignalen beider Lichtsensoren (401) zu steuern.

4. Fenstersystem zum Schutz der Privatsphäre (1) nach einem der vorstehenden Ansprüche, darüber hinaus einen Präsenzsensor (410) umfassend, wobei die Steuerungseinheit (300) darüber hinaus konfiguriert ist, um die Strahlung (201) der Beleuchtungseinheit in Abhängigkeit von einem Präsenzsensorsignal des Präsenzsensors (410) zu steuern.

5. Fenstersystem zum Schutz der Privatsphäre (1) nach einem der vorstehenden Ansprüche, wobei eines oder mehr von der Farbe, der Farbtemperatur, und der Intensität der Strahlung (201) der Beleuchtungseinheit variabel ist, wobei das Fenstersystem zum Schutz der Privatsphäre (1) darüber hinaus eine Benutzerschnittstelle (310) umfasst, wobei die Steuerungseinheit (300) darüber hinaus konfiguriert ist, um die Strahlung (201) der Beleuchtungseinheit in Abhängigkeit von einem Eingangssignal der Benutzerschnittstelle (310) zu steuern.

6. Fenstersystem zum Schutz der Privatsphäre (1) nach einem der vorstehenden Ansprüche, darüber hinaus eine zweite Beleuchtungseinheit (220) umfassend, die auf der anderen Seite (1120, 1110) der Fensterscheibe (100) als die Beleuchtungseinheit (200) angeordnet ist, wobei die zweite Beleuchtungseinheit (220) konfiguriert ist, um zweites Licht der Beleuchtungseinheit (221) bereitzustellen, wobei eines oder mehr von der Farbe, der Farbtemperatur, und der Intensität des zweiten Lichts der Beleuchtungseinheit (221) variabel ist und wobei die Steuerungseinheit (300) konfiguriert ist, um die Strahlung (201) der Beleuchtungseinheit in Abhängigkeit von dem zweiten Licht der Beleuchtungseinheit (221) zu steuern.

7. Fenstersystem zum Schutz der Privatsphäre (1) nach einem der vorstehenden Ansprüche, wobei die Fensterscheibe (100), die Beleuchtungseinheit (200), und die Steuerungseinheit (300) in einer einzigen Fenstereinheit (2) integriert sind.

8. Fenstersystem zum Schutz der Privatsphäre (1) nach einem der vorstehenden Ansprüche, wobei die Oberflächenstrukturen (105) reflektierende Oberflächenstrukturen umfassen und wobei die Strahlung (201) der Beleuchtungseinheit sichtbares Licht umfasst.

9. Fenstersystem zum Schutz der Privatsphäre (1) nach einem der vorstehenden Ansprüche, wobei die Oberflächenstrukturen (105) lumineszierendes Material (106) umfassen, das durch die Strahlung (201) der Beleuchtungseinheit angeregt werden kann.

10. Fenstersystem zum Schutz der Privatsphäre (1) nach einem der vorstehenden Ansprüche, eine Vielzahl von Fensterscheiben (100), eine Vielzahl von Beleuchtungseinheiten (200) und die besagte Steuerungseinheit (300) umfassend, wobei die Vielzahl von Beleuchtungseinheiten (200) konfiguriert sind, um eine der Oberflächen (110, 120) der Vielzahl von Fensterscheiben (100) mit der Strahlung (201) der Beleuchtungseinheit zu bestrahlen, und wobei die Steuerungseinheit (300) konfiguriert ist, um die Strahlung der Beleuchtungseinheit der Vielzahl von Beleuchtungseinheiten (200) in Abhängigkeit von dem Eingangssignal zu steuern.

11. Fenstersystem zum Schutz der Privatsphäre (1) nach Anspruch 10, eine Vielzahl von Teilmengen (SS) von einer oder mehreren Fensterscheiben (100) und einer oder mehreren Beleuchtungseinheiten (100) umfassend, die konfiguriert sind, um die besagte eine oder mehreren Fensterscheiben innerhalb der Teilmenge (SS) zu bestrahlen, wobei die besagte eine oder mehreren Beleuchtungseinheiten (100) aus der Vielzahl von Teilmengen (SS) unabhängig voneinander steuerbar sind, und wobei jede Teilmenge (SS) betrieblich mit einer Benutzerschnittstelle (310) verbunden ist, um die besagte eine oder mehreren Beleuchtungseinheiten (100) innerhalb der Teilmenge (SS) zu steuern.

12. Verwendung eines Fenstersystems zum Schutz der Privatsphäre (1) nach einem der vorstehenden Ansprüche zur Steuerung des Schutzes der Privatsphäre auf zumindest einer der Seiten (1110, 1120) der Fensterscheibe (100).

13. Verwendung nach Anspruch 12, wobei das Fenstersystem zum Schutz der Privatsphäre (1) in ein Hotelzimmer (501) integriert ist.

14. Verwendung nach Anspruch 13, wobei das Hotelzimmer (501) darüber hinaus eine zweite Beleuchtungseinheit (220) umfasst, die konfiguriert ist, um zweites Licht der Beleuchtungseinheit (221) bereitzustellen, wobei eines oder mehr von der Farbe, der Farbtemperatur, und der Intensität des zweiten Lichts der Beleuchtungseinheit (221) variabel ist und wobei die Steuerungseinheit (300) konfiguriert ist, um die Strahlung (201) der Beleuchtungseinheit in Abhängigkeit von dem zweiten Licht der Beleuchtungseinheit (221) zu steuern.

15. Verwendung einer Vielzahl von Fenstersystemen zum Schutz der Privatsphäre (1) zur Steuerung des Schutzes der Privatsphäre auf zumindest einer der Seiten (1110, 1120) der Vielzahl von Fensterscheiben (100) nach einem der Ansprüche 12 bis 14, wobei die Vielzahl von Fensterscheiben (100) in eine Fassade (BF) eines Gebäudes (B) integriert sind, wobei die Steuerungseinheit (300) darüber hinaus konfiguriert ist, um eines oder mehr eines Buchstabens, eines Schriftzeichens, einer Ikone, eines Symbols, eines Zeichens, eines Graphems, und einer Illustration mit der Vielzahl von Fenstersystemen zum Schutz der Privatsphäre (1) auf der Fassade (BF) anzuzeigen.

## Revendications

1. Système de fenêtre pour l'intimité (1) comprenant un panneau de fenêtre (100), une unité d'éclairage (200) et une unité de commande (300), dans lequel :
- le panneau de fenêtre (100) comprend une première surface (110), une deuxième surface (120) et un bord (130), dans lequel le panneau de fenêtre (100) transmet la lumière visible, dans lequel au moins une des surfaces (110, 120) du panneau de fenêtre (100) comprend des structures de surface (105), dans lequel l'au moins une des surfaces (110, 120) comprenant lesdites structures de surface (105) est configurée pour générer une lumière d'intimité visible (101) sous irradiation par rayonnement d'unité d'éclairage (201)
- l'unité d'éclairage (200) est configurée pour irradier au moins une des surfaces (110, 120) du panneau de fenêtre (100) avec ledit rayonnement d'unité d'éclairage (201) depuis un premier (1110) et/ou depuis un deuxième (1120) côté provoquant ainsi ladite lumière d'intimité (101) et réduisant la visibilité à travers le panneau de fenêtre (100) dans au moins une direction ; et
- l'unité de commande (300) est configurée pour commander le rayonnement d'unité d'éclairage (201) en fonction d'un signal d'entrée.

2. Système de fenêtre pour l'intimité (1) selon la revendication 1, comprenant en outre un capteur de lumière (401), dans lequel l'unité de commande (300) est en outre configurée pour commander le rayonnement d'unité d'éclairage (201) en fonction d'un signal de capteur de lumière ambiante du capteur de lumière (401).

3. Système de fenêtre pour l'intimité (1) selon la revendication 2, comprenant des capteurs de lumière (401) des deux côtés (1110, 1120) du panneau de fenêtre (100), dans lequel l'unité de commande (300) est en outre configurée pour commander le rayonnement d'unité d'éclairage (201) en fonction de signaux de capteur de lumière ambiante des deux capteurs de lumière (401).

4. Système de fenêtre pour l'intimité (1) selon l'une quelconque des revendications précédentes, comprenant en outre un capteur de présence (410), dans lequel l'unité de commande (300) est en outre configurée pour commander le rayonnement d'unité d'éclairage (201) en fonction d'un signal de capteur de présence du capteur de présence (410).

5. Système de fenêtre pour l'intimité (1) selon l'une quelconque des revendications précédentes, dans lequel une ou plusieurs caractéristiques parmi la couleur, la température de couleur et l'intensité du rayonnement d'unité d'éclairage (201) sont variables, dans lequel le système de fenêtre pour l'intimité (1) comprend en outre une interface utilisateur (310), dans lequel l'unité de commande (300) est en outre configurée pour commander le rayonnement d'unité d'éclairage (201) en fonction d'un signal d'entrée de l'interface utilisateur (310).

6. Système de fenêtre pour l'intimité (1) selon l'une quelconque des revendications précédentes, comprenant en outre une deuxième unité d'éclairage (220) agencée sur un autre côté (1120, 1110) du panneau de fenêtre (100) que l'unité d'éclairage (200), dans lequel la deuxième unité d'éclairage (220) est configurée pour fournir une deuxième lumière d'unité d'éclairage (221), dans lequel une ou plusieurs caractéristiques parmi la couleur, la température de couleur et l'intensité de la deuxième lumière d'unité d'éclairage (221) sont variables, et dans lequel l'unité de commande (300) est configurée pour commander le rayonnement d'unité d'éclairage (201) en fonction de la deuxième lumière d'unité d'éclairage (221).

7. Système de fenêtre pour l'intimité (1) selon l'une quelconque des revendications précédentes, dans lequel le panneau de fenêtre (100), l'unité d'éclairage (200) et l'unité de commande (300) sont intégrés dans une même unité de fenêtre (2).

8. Système de fenêtre pour l'intimité (1) selon l'une quelconque des revendications précédentes, dans lequel les structures de surface (105) comprennent des structures de surface réfléchissante et dans lequel le rayonnement d'unité d'éclairage (201) comprend une lumière visible.

9. Système de fenêtre pour l'intimité (1) selon l'une quelconque des revendications précédentes, dans lequel les structures de surface (105) comprennent un matériau luminescent (106) excitable par le rayonnement d'unité d'éclairage (201).

10. Système de fenêtre pour l'intimité (1) selon l'une quelconque des revendications précédentes, comprenant une pluralité de panneaux de fenêtre (100), une pluralité d'unités d'éclairage (200) et ladite unité de commande (300), dans lequel la pluralité d'unités d'éclairage (200) sont configurées pour irradier l'une des surfaces (110, 120) de la pluralité de panneaux de fenêtre (100) avec un rayonnement d'unité d'éclairage (201), et dans lequel l'unité de commande (300) est configurée pour commander le rayonnement d'unité d'éclairage de la pluralité d'unités d'éclairage (200) en fonction du signal d'entrée.

11. Système de fenêtre pour l'intimité (1) selon la revendication 10, comprenant en outre une pluralité de sous-ensembles (SS) d'un ou de plusieurs panneaux de fenêtre (100) et une ou plusieurs unités d'éclairage (100) configurées pour irradier lesdits un ou plusieurs panneaux de fenêtre dans le sous-ensemble (SS), dans lequel lesdites une ou plusieurs unités d'éclairage (100) de la pluralité de sous-ensembles (SS) peuvent être indépendamment commandées, et dans lequel chaque sous-ensemble (SS) est fonctionnellement couplé à une interface utilisateur (310) pour commander lesdites une ou plusieurs unités d'éclairage (100) dans le sous-ensemble (SS).

12. Utilisation d'un système de fenêtre pour l'intimité (1) selon l'une quelconque des revendications précédentes pour commander l'intimité au niveau d'au moins un des côtés (1110, 1120) du panneau de fenêtre (100).

13. Utilisation selon la revendication 12, dans laquelle le système de fenêtre pour l'intimité (1) est intégré dans une chambre d'hôtel (501).

14. Utilisation selon la revendication 13, dans laquelle la chambre d'hôtel (501) comprend en outre une deuxième unité d'éclairage (220) configurée pour fournir une deuxième lumière d'unité d'éclairage (221), dans laquelle une ou plusieurs caractéristiques parmi la couleur, la température de couleur et l'intensité de la deuxième lumière d'unité d'éclairage (221) sont variables, et dans laquelle l'unité de commande (300) est configurée pour commander le rayonnement d'unité d'éclairage (201) en fonction de la deuxième lumière d'unité d'éclairage (221).

15. Utilisation d'une pluralité de systèmes de fenêtre pour l'intimité (1) pour contrôler l'intimité au niveau d'au moins un des côtés (1110, 1120) de la pluralité de panneaux de fenêtre (100) selon l'une quelconque des revendications 12-14, dans laquelle la pluralité de panneaux de fenêtre (100) sont intégrés dans une façade (BF) d'un bâtiment (B), dans laquelle l'unité de commande (300) est en outre configurée pour afficher un ou plusieurs éléments parmi une lettre, un caractère, une icône, un symbole, un signe, un graphème et une illustration avec une pluralité de systèmes de fenêtre pour l'intimité (1) sur la façade (BF).
